# EUROPÄISCHE PATENTANMELDUNG

(11) **EP 1 632 409 A1**
(43) Veröffentlichungstag der Anmeldung: **08.03.2006**
(21) Anmeldenummer: 05025123.0
(22) Anmeldetag: 28.03.2003
(51) Int. Cl.: B60R 22/405, B60R 22/46

(54) **Leistungsstraffer**

(30) Priorität: 28.03.2002 DE 10213906
(62) Teilanmeldung aus: 03745286.9
(71) Anmelder: AUTOLIV DEVELOPMENT AB, 447 83 Vargarda (SE)
(72) Erfinder: Löffler, Kay, 25421 Pinneberg (DE); Pech, Michael, 22459 Hamburg (DE); Schmidt, Martin, 25337 Elmshorn (DE); Schmidt, Thomas, 23669 Timmendorfer Strand (DE); Schneider, Thomas, 25813 Husum (DE); Suhr, Stefan, 25336 Elmshorn (DE); Bösch, Stefan, 21644 Revenahe (DE)
(74) Vertreter: Müller, Karl-Ernst

(57) **Zusammenfassung**

Selbstsperrender Gurtaufroller mit einem Gehäuse (10), mit einer wenigstens ein fahrzeugsensitiv und/oder gurtbandsensitiv ansteuerbares Blockiermittel (25) aufweisenden Blockiereinrichtung für die Gurtwelle (12) und mit einer auf die Gurtwelle (12) einwirkenden Strammvorrichtung, bestehend aus einem über eine Antriebsvorrichtung in Drehung zu versetzenden Antriebsrad (13) welches bei Auslösung der Strammvorrichtung mit der Gurtwelle (12) koppelbar ist, wobei das Antriebsrad (13) der Strammvorrichtung über die Blockiereinrichtung der Gurtwelle (12) kraftübertragend mit der Gurtwelle (12) verbindbar ist, dadurch gekennzeichnet, dass zur getrennten Ausführung von Blockierfunktion und Kopplungsfunktion die Blockiereinrichtung für die Gurtwelle (12) zusätzlich zu dem die Gurtblockierung bewirkenden Blockiermittel (25) eine an der Blockiervorrichtung angeordnete und von dem Antriebsrad (13) aktivierbare Klinke zur Ankopplung des Antriebsrades (13) an die Blockiereinrichtung für die Gurtwelle (12) aufweist.

## Beschreibung

Die Erfindung betrifft einen selbstsperrenden Gurtaufroller mit einem Gehäuse, mit einer wenigstens ein fahrzeugsensitiv und/oder gurtbandsensitiv in eine gehäuseseitige Blockierverzahnung einsteuerbares Blockiermittel aufweisenden Blockiereinrichtung für die Gurtwelle und mit einer auf die Gurtwelle einwirkenden Strammvorrichtung bestehend aus einem über eine Antriebsvorrichtung in Drehung zu versetzenden Antriebsrad, das bei Auslösung der Strammvorrichtung mit der Gurtwelle koppelbar ist.

Ein selbstsperrender Gurtaufroller mit den vorgenannten Merkmalen ist in der DE 34 07 378 A1 beschrieben; hierbei ist an dem als Seilscheibe eines pyrotechnischen Seilantriebs ausgebildeten Antriebsrad ein exzentrisch gelagertes, im Auslösefall radial gegen die Kraft einer das Sperrglied in seine Ruhelage vorspannenden Feder ausschwenkbares Sperrklied als Kupplungsglied vorgesehen, welches bei seiner durch die Rotation der Seilscheibe bewirkten Auslenkung in die mit der Gurtwelle des Gurtaufrollers gekoppelte Verzahnung eingreift und so eine formschlüssige Verbindung zwischen Seilscheibe und Gurtwelle herstellt.

Dabei ist die Seilscheibe mit Sperrglied auf der der die Blockiereinrichtung für die fahrzeugsensitiv und/oder gurtbandsensitiv gesteuerte Blockierung der Gurtwelle tragenden Gehäuseseite gegenüberliegenden Gehäuseseite angeordnet.

Mit dem bekannten Gurtaufroller ist der Nachteil einer großen axialen Baugröße verbunden, da auf beiden Seiten des U-förmigen Gehäuses jeweils Funktionsteile einschließlich entsprechender Steuer- bzw. Kupplungseinrichtungen mit der dadurch bedingten Baubreite angeordnet sind.

Der Erfindung liegt daher die Aufgabe zugrunde, bei einem Gurtaufroller mit den gattungsgemäßen Merkmalen die vorgenannten Nachteile zu vermeiden und einem Gurtaufroller bereitzustellen, der bei geringer Baubreite einen einfachen Aufbau aufweist.

Die Lösung dieser Aufgabe ergibt sich einschließlich vorteilhafter Ausgestaltungen und Weiterbildungen der Erfindung aus dem Inhalt der Patentansprüche, welche dieser Beschreibung nachgestellt sind.

Die Erfindung sieht in ihrem Grundgedanken vor, daß das Antriebsrad der Strammvorrichtung über die Blockiereinrichtung für die Gurtwelle kraftübertragend mit der Gurtwelle verbindbar ist.

Mit der Erfindung ist der Vorteil einer kompakten Bauweise verbunden, weil die ohnehin vorhandene fahrzeugsensitiv und/oder gurtbandsensitiv angesteuerte Blockiereinrichtung nun in einer zusätzlichen Funktion auch für die Kupplung des Antriebsrades der Strammvorrichtung an die Gurtwelle für den Strammvorgang herangezogen wird.

In einer ersten Ausführungsform der Erfindung ist vorgesehen, dass das Antriebsrad unmittelbar über das an der Blockiereinrichtung angeordnete Blockiermittel kraftübertragend mit der Gurtwelle verbindbar ist, so dass dem Blockiermittel im Normalbetrieb des Gurtaufrollers wie im Strammbetrieb eine Doppelfunktion zukommt.

Alternativ kann vorgesehen sein, dass die Blockiereinrichtung für die Gurtwelle zusätzlich zu dem die Gurtblockierung bewirkenden Blockiermittel eine an der Blockiervorrichtung gelagerte und von dem Antriebsrad aktivierbare Klinke zur Abkopplung des Antriebsrades an die Blockiereinrichtung aufweist. In diesem Fall können getrennte Klinken vorgesehen sein, die die Blockierfunktion und die Kopplungsfunktion getrennt ausführen. Dies erlaubt eine angepasste Auslegung der Klinken.

Im einzelnen ist nach einem Ausführungsbeispiel der Erfindung vorgesehen, daß das Antriebsrad im Ruhezustand kraftübertragend an dem Gehäuse des Gurtaufrollers festgelegt ist und als Blockierverzahnung wirkt, und daß durch das Auslösen der Strammvorrichtung das Antriebsrad von dem Gehäuse lösbar und über das Blockiermittel der Blockiereinrichtung kraftübertragend mit der Gurtwelle verbindbar ist.

Damit wird dem Antriebsrad der Strammvorrichtung eine weitere Funktion als gehäusefeste Verzahnung für den Blockierfall des Gurtaufrollers bei dessen Normalbetrieb ohne Ansprechen der Strammvorrichtung zugewiesen. Hierzu ist das Antriebsrad gegenüber dem Gehäuse des Gurtaufrollers in Gurtabwickelrichtung undrehbar festgelegt, so daß bei einer vorzugsweise formschlüssigen Verbindung der die Gurtblockierung bildenden, Blockiermittel der Blockiereinrichtung mit dem Antriebsrad die von der Gurtwelle ausgehenden Blockierkräfte über die Blockiermittel und das Antriebsrad in das Gehäuse eingeleitet werden. Gleichzeitig ist das Antriebsrad in Gurtaufwickelrichtung drehbar angeordnet, so daß bei Ansprechen der Strammvorrichtung über die Drehung des Antriebsrades in Gurtaufwickelrichtung über die eingesteuerten Blockiermittel auch die Gurtwelle in Gurtaufwickelrichtung gedreht wird.

Hierzu kann vorgesehen sein, daß das ringförmig ausgebildete Antriebsrad sowohl eine Außenverzahnung als auch eine zum Eingriff des Blockiermittels der Blockiervorrichtung eingerichtete Innenverzahnung aufweist und am Gehäuse des Gurtaufrollers wenigstens eine durch Federkraft nachgiebig in Eingriff mit der Außenverzahnung des Antriebsrades stehende Blockierklinke angeordnet ist, wobei nach einem Ausführungsbeispiel die Außenverzahnung des Antriebsrades und die Blockierklinke derart zueinander ausgerichtet sind, daß eine Drehung des Antriebsrades in Gurtabwickelrichtung stets blockiert und eine Drehung des Antriebsrades in Gurtaufwickelrichtung durch Überratschen der Blockierklinke über die Außenverzahnung des Antriebsrades ermöglicht ist.

Nach einem ersten Ausführungsbeispiel der Erfindung ist vorgesehen, dass die Blockierklinke seitlich neben dem U-Schenkel des Gehäuses angeordnet und an dem U-Schenkel unter Vorspannung durch eine Drehfeder schwenkbar gelagert ist.

In einer zweckmäßigen Ausführungsform der Erfindung kann jedoch alternativ vorgesehen sein, dass die Blockierklinke in der Ebene des U-Schenkels in einer an diesem angeordneten Ausparung angeordnet und in der Aussparung schwenkbar gelagert ist, wobei zwischen der Blockierklinke und dem Rand der Aussparung eine Blattfeder angeordnet ist. Hiermit ist eine besonders platzsparende Bauweise des erfindungsgemäßen Gurtaufrollers verbunden.

Zur gleichmäßigen Lastverteilung können auf dem Umfang des Antriebsrades mehrere Blockierklinken an dem Gehäuse des Gurtaufrollers gelagert sein. Hierbei kann in einer Abwandlung vorgesehen sein, daß die Blockierklinken an dem Antriebsrad angeordnet sind und eine gehäusefeste Verzahnung als Blockierverzahnung an dem Gehäuse ausgebildet ist.

Soweit an dem Antriebsrad sowohl eine Blockierverzahnung zum Festlegen des Antriebsrades an dem Gehäuseschenkel als auch die Innenverzahnung zur Ankopplung der Gurtwelle vorzusehen sind, ist nach einem ersten Ausführungsbeispiel der Erfindung vorgesehen, dass die als Außenverzahnung ausgebildete Blockierverzahnung und die Innenverzahnung des Antriebsrades in einer Ebene angeordnet sind. Soweit hiermit bereits ebenfalls eine raumsparende Anordnung der Verzahnungen verbunden ist, ergibt sich ein besonderer Herstellungsvorteil dann, wenn nach einem Ausführungsbeispiel der Erfindung die Außenverzahnung durch Ausformen der Zähne der Innenverzahnung aus dem Ringprofil des Antriebsrades gebildet ist derart, dass Außenverzahnung und Innenverzahnung eine Verzahnung mit einheitlichen Zähnen bilden.

In einer alternativen Ausführungsform kann vorgesehen sein, dass die als Innenverzahnung ausgebildete Blockierverzahnung und die zugehörige Innenverzahnung des Antriebsrades axial nebeneinander an der Innenseite des Ringprofils des Antriebsrades angeordnet sind, wobei die gehäusefest gelagerte Blockierklinke zum Eingriff mit der Innen-Blockierverzahnung U-förmig ausgebildet ist und somit von außen her in das Antriebsrad eingreift.

Nach einem Ausführungsbeispiel der Erfindung ist auch ein anderes Konstruktionsprinzip zur Festlegung des Antriebsrades vorgesehen, bei welchem das Antriebsrad vor dem Ansprechen der Strammvorrichtung und nach dem Ansprechen der Strammvorrichtung auf unterschiedliche Weise derart festgelegt ist, dass es als quasi gehäusefeste Blockierverzahnung für die Gurtwellenblockierung wirken kann. Hierzu ist nach einem Ausführungsbeispiel der Erfindung vorgesehen, dass das Antriebsrad an dem Gehäuse über unter Last zerstörbare Blockiermittel festgelegt und die Antriebsvorrichtung der Strammvorrichtung derart ausgebildet ist, dass nach Abschluss der Antriebsbewegung eine Rückbewegung der Antriebsvorrichtung in Gurtauszugsrichtung ausgeschlossen ist derart, dass über die blockierte Antriebsvorrichtung das Antriebsrad undrehbar festgelegt ist und als Blockierverzahnung wirkt.

Während das beispielsweise über entsprechend ausgelegte Scherstifte vor Auslösung der Strammvorrichtung festgelegte Antriebsrad als Widerlager für den Eingriff der am Profilkopf der Welle angeordneten Sperrklinken bei Normalbetrieb des Gurtaufrollers wirkt, ist nach Abschluss der Strammbewegung durch geeignete und im Stand der Technik an sich bekannte Maßnahmen das Antriebsrad gegen eine Rückdrehung in Gurtauszugsrichtung über die Blockierung der Antriebsvorrichtung selbst derart festgelegt, dass das Antriebsrad die von der Gurtwelle in Gurtauszugsrichtung ausgehenden Blockierkräfte aufnehmen kann.

Soweit beispielsweise, wie zu den Ausführungsbeispielen der Erfindung noch beschrieben, die Antriebsvorrichtung der Strammvorrichtung als aus der DE 196 02 549 A1 bekannter Kugelstraffer ausgebildet ist, kann zur Festlegung des Antriebsrades nach Abschluss der Strammbewegung eine Blockierung der Kugeln bzw. der Antriebskörper in dem Antriebskanal über geeignete Kugelklemmungen vorgesehen sein. Soweit die Antriebsvorrichtung beispielsweise als Seilstraffer ausgebildet ist, stehen Maßnahmen zur Festlegung des Antriebsseils mittels geeigneter Seilklemmen oder Rücklaufsperren zur Verfügung.

Es kann jedoch auch die Antriebsvorrichtung selbst zur Festlegung des Antriebsrades auch vor Auslösung der Strammvorrichtung anstelle der erwähnten Scherstifte herangezogen werden, indem beispielsweise die Kugeln bzw. Antriebskörper an dem Antriebsrad in einer blockierenden Weise festgelegt sind derart, dass bei Beaufschlagung der Antriebsvorrichtung in Strammrichtung eine Drehung des Antriebsrades möglich ist, in der Gegenrichtung also in Gurtauszugsrichtung jedoch nicht.

Da vor Ansprechen der Strammvorrichtung die Kopplung der Gurtwelle mit dem Antriebsrad zum Zwecke der Blockierung über die gurtaufrollerseitige Sensorik herbeigeführt wird und diese Kopplung auch für die Übertragung der Strammbewegung notwendig ist, ist nach einem Ausführungsbeispiel der Erfindung vorgesehen, daß ein von der Strammvorrichtung ausgelöstes Ansteuerelement zur Ankopplung des Blockiermittels der Blockiereinrichtung an das Antriebsrad vorgesehen ist. Über das über die Strammvorrichtung ausgelöste Ansteuerelement wird in gleicher Weise wie für die Gurtblockierung das Blockiermittel mit dem Antriebsrad gekoppelt, so daß eine lastübertragende Verbindung zwischem dem Antriebsrad und der Gurtwelle besteht und über diese lastübertragende Verbindung dann auch die Strammbewegung von dem Strammerantrieb auf die Welle übertragen wird. Hiermit ist der Vorteil verbunden, daß nach der hergestellten Kopplung das Ansteuerelement während des Strammvorganges unbelastet ist, weil wie im Blockierfall die Lastübertragung unmittelbar zwischen Antriebsrad und Gurtwelle gegeben ist. Soweit im Stand der Technik üblicherweise zwischen dem Antriebsrad und der Gurtwelle eine während des gesamten Strammvorganges kraftübertragende Kupplung erforderlich ist, ist erfindungsgemäß eine derartige Kupplung nunmehr vermieden.

Hinsichtlich der Ausbildung der Sensorik kann in an sich bekannter Weise vorgesehen sein, daß zur gurtbandsensitiven Steuerung des Blockiermittels eine die Blockiereinrichtung umgreifende Trägheitsmasse vorgesehen ist, deren Relativbewegung bezüglich der Drehbewegung der Blockiereinrichtung das Blockiermittel in Eingriff mit dem Antriebsrad aussteuert, wobei der Trägheitsmasse eine Außenverzahnung als Blockierverzahnung zugeordnet sein kann, mit welcher während des Normalbetriebs des Gurtaufrollers der Sensorhebel eines fahrzeugsensitiven Sensors in Eingriff bringbar ist. Bleibt also die Trägheitsmasse aufgrund eines zu schnellen Gurtbandauszuges in ihrer Drehbewegung hinter der Drehung der Gurtwelle zurück oder wird die Trägheitsmasse in ihrer Drehbewegung durch den fahrzeugsensitiven Sensor angehalten, so wird die sich einstellende Relativbewegung zwischen Trägheitsmasse und Gurtwelle in die Aussteuerung der am Profilkopf gelagerten Sperrklinke in Eingriff mit der Innenverzahnung des Antriebsrades umgesetzt, wodurch die lastübertragende Verbindung zwischen Gurtwelle und Antriebsrad hergestellt ist.

Soweit die Gurtwelle und das Antriebsrad über die Aussteuerung der am Profilkopf belagerten Sperrklinken miteinander zu koppeln sind, sind unterschiedliche Ausführungsbeispiele für die Ansteuerung der Sperrklinken über eine zusätzlich in die Außenverzahnung der Trägheitsmasse einsteuerbare Kupplungsklinke vorgesehen, die dann die entsprechende Relativbewegung der Trägheitsmasse gegenüber der Gurtwelle einleitet.

Nach einer ersten Ausführungform der Erfindung ist vorgesehen, dass die Kupplungsklinke bei Auslösung der Strammvorrichtung mittels einer gesonderten Klinkenbetätigung in Eingriff mit der Blockierverzahnung der Trägheitsmaße einsteuerbar ist.

Hierzu kann vorgesehen sein, dass die Klinkenbetätigung als ein die Kupplungsklinke bewegender Aktuator ausgebildet ist, wobei dieser Aktuator ein Elektromagnet oder ein Piezoelement oder ein anderes geeignetes Antriebselement sein kann.

Alternativ ist vorgesehen, dass der Aktuator zur Betätigung der Kupplungsklinke eine pyrotechnisch angetriebene Kolbeneinheit ist, wobei zur Betätigung der Kolbeneinheit eine gesonderte pyrotechnische Antriebseinheit vorgesehen sein kann; alternativ ist es auch möglich die Kolbeneinheit an die pyrotechnische Antriebsvorrichtung der Strammvorrichtung anzuschließen, so dass die Kolbeneinheit zur Betätigung der Kupplungsklinke von der Antriebsvorrichtung der Strammvorrichtung beaufschlagbar ist.

Auch weitere gesonderte druckgesteuerte Antriebsmittel sind denkbar, wie hydraulische Antriebsmöglichkeiten, die Erzeugung eines Antriebsmediums mittels Abbrennens einer Sprengschnur, ferner Bowdenzugbetätigungen oder Betätigungen über ein Hebelgestänge wie auch Betätigungen über sich ausdehnende Druckkörper wie Luftblasen oder ähnliches.

In einer weiteren Ausführungsform der Erfindung, die nicht mehr auf eine die Blockiereinrichtung umgreifende Trägheitsmasse zurückgreift, ist vorgesehen, dass das Ansteuerelement ein an dem Antriebsrad gelagerter und über ein Gehäuseteil zwangsgeführter Mitnehmerhebel ist, der bei Drehung des Antriebsrades zwangsgesteuert in Eingriff mit der Blockierverzahnung einer trägheitsgesteuerten Steuerscheibe für die Blockiermittel gelangt und im Anschluss an die durch die Steuerscheibe bewirkte Verriegelung der Blockiermittel mit dem Antriebsrad außer Eingriff mit der Steuerscheibe kommt. Es ist ferner vorgesehen, dass die Steuerscheibe an der Außenseite einer das Antriebsrad umgreifenden Gehäusekappe auf einem Fortsatz der Gurtwelle angeordnet ist und in der Gehäusekappe eine Kulissenführung für die Zwangsführung des die Gehäusekappe durchgreifenden Mitnehmerhebel ausgebildet ist, wobei vorgesehen ist, dass die Kulissenführung derart ausgebildet ist, dass der Mitnehmerhebel nach Beendigung der durch die Relativdrehung der Steuerscheibe gegenüber dem Profilkopf bewirkten Aussteuerung der Blockierklinken in Eingriff mit der Innenverzahnung des Antriebsrades abgeschert wird.

Nach einem weiteren Ausführungsbeispiel der Erfindung ist vorgesehen, daß das Ansteuerelement eine an einem in die topfförmige Trägheitsmasse reichenden und mit dem Antriebsrad verbundenen Mitnehmerteil ausschwenkbar gelagerte Klinke ist, die in Eingriff mit einer an der Innenseite der topfförmigen Trägheitsmasse ausgebildeten Innenverzahnung steuerbar ist. Hierzu kann vorgesehen sein, daß die Klinke an einem an dem Mitnehmerteil gehalterten Federelement schwenkbar gelagert ist, wobei das Federelement wenigstens einen die Klinke in ihrer Ruheposition festlegenden Federarm aufweist. Der Federarm legt somit die Ansprechschwelle fest, bei welcher aufgrund der Drehung des Antriebsrades und des damit verbundenen Mitnehmerteils die Klinke in Eingriff mit der Innenverzahnung der Trägheitsmasse ausgesteuert wird, so daß die Trägheitsmasse in Drehung versetzt wird; da gleichzeitig bei Auslösung der Strammvorrichtung die Gurtwelle steht oder sich jedenfalls sehr viel langsamer dreht, kommt es zu einer Relativdrehung zwischen der Trägheitsmasse und der Gurtwelle, so daß die Blockiermittel der Blockiervorrichtung in Eingriff mit der Innenverzahnung des Antriebsrades ausgesteuert werden, so daß die unmittelbar lastübertragende Verbindung zwischen dem Antriebsrad und der Gurtwelle hergestellt ist.

Hinsichtlich der Verbindung des Antriebsrades mit der bei diesem Ausführungsbeispiel wiederum topfförmig ausgebildeten Trägheitsmasse und der daran ausgebildeten Innenverzahnung ist zur Vereinfachung der Kupplungsverbindung vorgesehen, dass das Ansteuerelement aus einem von der Antriebsvorrichtung der Strammvorrichtung zu Beginn von deren Antriebsbewegung in eine an der Innenseite der topfförmigen Trägheitsmasse ausgebildete Innenverzahnung einsteuerbares Kupplungsglied besteht, wobei das Kupplungsglied aus einem an dem Antriebsrad unter der Wirkung der Antriebsvorrichtung längsverschiebbar angeordneten Stift besteht, der durch seine Längsverschiebung in Eingriff mit der Innenverzahnung der Trägheitsmasse gelangt.

Nach einem Ausführungsbeispiel der Erfindung ist vorgesehen, daß das Antriebsrad mit seiner Außenverzahnung auf der Außenseite eines Gehäuseschenkels des U-förmigen Gehäuses des Gurtaufrollers angeordnet und die Blockierklinke auf der Außenseite des Gehäuseschenkels gelagert ist.

Alternativ kann vorgesehen sein, daß das Antriebsrad mit seinem mit der außerhalb des U-förmigen Gehäuses des Gurtaufrollers angeordneten Antriebsvorrichtung zusammenwirkenden Bereich auf der Außenseite des Gehäuseschenkels angeordnet ist und mit einem die Außenverzahnung tragenden Flansch den Gehäuseschenkel in einer Lageröffnung durchgreift, wobei die Blockierklinke auf der Innenseite des Gehäuseschenkels gelagert ist. Hierbei bildet in zweckmäßiger Weise der den Gehäuseschenkel durchgreifende Fortsatz des Antriebsrades das Drehlager für die Drehung des Antriebsrades.

Die Erfindung umfasst aber auch jegliche andere räumliche Zuordnung der für die Funktion wesentlichen Konstruktionselemente.

Die Erfindung ist insbesondere auch anwendbar auf eine Bauart von Gurtaufrollern mit einer als Torsionsstab ausgebildeten Kraftbegrenzungseinrichtung, wie diese beispielsweise aus der DE 43 31 027 A1 bekannt ist. Auch bei dieser Gurtaufroller-Gurtstrammer-Kombination sind die fahrzeugsensitiv und/oder gurtbandsensitiv gesteuerte Blockiereinrichtung für die Gurtwelle und die Kupplung zwischen der Gurtwelle und dem Antriebsrad der Strammvorrichtung auf unterschiedlichen Seiten des Gurtaufrollergehäuses angeordnet. Bei derartigen, mit einem Torsionsstab versehenen Gurtaufroller-Gurtstrammer-Kombinationen tritt als zusätzliches Problem auf, daß nach dem Abschluß der in Gurtaufwickelrichtung wirksamen Strammbewegung zur Ausführung der Kraftbegrenzung eine Drehung der Gurtwelle in Gurtabwickelrichtung erforderlich ist, die durch den Antrieb der Strammvorrichtung erschwert oder begrenzt, gegebenenfalls sogar blockiert sein kann. Hierzu schlägt die DE 43 31 027 A1 zusätzlich eine aufwendige Einrichtung zur Abkupplung des Antriebsrades von der Gurtwelle nach Beendigung der Strammbewegung vor. Mit der Anwendung des Grundgedankens der Erfindung auf derartige Gurtaufroller-Gurtstrammer-Kombinationen mit Kraftbegrenzung ist der zusätzliche Vorteil verbunden, daß die Kraftbegrenzung nach Abschluß der Strammbewegung nicht behindert ist.

Soweit die Erfindung in einem Ausführungsbeispiel dazu vorsieht, daß der Torsionsstab einen das Blockiermittel tragenden und von der Trägheitsmasse umgriffenen Profilkopf aufweist, kann in zweckmäßiger Weise nach einem Ausführungsbeispiel der Erfindung der Profilkopf mit der Gurtwelle über Scherstifte verbunden sein, wie dies grundsätzlich aus der DE 195 28 115 A1 bekannt ist. Hiermit wird die Bewegung der Gurtwelle sowohl beim normalen Auf- und Abwickeln des Gurtbandes wie auch beim Ansprechen der Strammvorrichtung unter Überbrückung des Torsionsstabes unmittelbar auf den Profilkopf übertragen. Nach Abschluß einer Strammbewegung kommt es bei entsprechender Auszugsbelastung an der Gurtwelle bei einem Unfallgeschehen zu einem Abbrechen der Scherstifte, so daß sich die Welle nunmehr über Verdrillung des Torsionsstabes gegenüber dem blockierten Profilkopf weiter drehen kann. Hieraus ergibt sich der Vorteil, daß während des Kraftbegrenzungsvorganges keine Verbindung zwischen der Gurtwelle und der Strammvorrichtung mehr besteht, so daß insoweit auch die im Stand der Technik vorhandenen Behinderungen der Kraftbegrenzungsbewegung der Gurtwelle nicht auftreten.

In der Zeichnung sind Ausführungsbeispiele der Erfindung wiedergegeben, welches nachstehend beschrieben sind. Es zeigen:
- Fig. 1: einen Gurtaufroller mit Strammvorrichtung in einer Gesamtansicht mit teils auseinandergezogenenen Baugruppen,
- Fig. 2: die Blockierseite des Gurtaufrollers mit integriertem Antriebsrad in einer auseinandergezogenen Darstellung,
- Fig. 3: den Gegenstand der Figur 2 aus einer anderen Blickrichtung,
- Fig. 4: das straffersensitive Steuersystem für die Ankopplung der Gurtwelle an das Antriebsrad in einer Einzeldarstellung.
- Fig. 5: einen Gehäuseschenkel des Gurtaufrollergehäuses mit Blockierklinken zur Festlegung des Antriebsrades,
- Fig. 6: eine Anordnung zur Ankopplung der Sperrklinken des Profilkopfes an das Antriebsrad in einer schematischen Darstellung,
- Fig. 7: die Anordnung gemäß Figur 6 mit einer gesonderten, pyrotechnischen Antriebseinheit,
- Fig. 8: die Anordnung gemäß Figur 6, bei der die pyrotechnische Antriebsvorrichtung der Strammvorrichtung den Antriebsimpuls für die Betätigung der Kupplungsklinke liefert,
- Fig. 9: eine andere Ausführungsform der Ankopplung der Sperrklinke des Profilkopfes an das Antriebsrad,
- Fig. 10: den Gegenstand der Figur 9 in einer geschnittenen Seitenansicht,
- Fig. 11: das Steuerungssystem für die Ankopplung der Gurtwelle an das Antriebsrad gemäß Figuren 1 bis 3 in einer anderen Ausführungsform,
- Fig. 12: die Festlegung des Antriebsrades an einem Gehäuseschenkel in einer anderen Ausführungsform in einer schematischen Darstellung,
- Fig. 13: die Festlegung des Antriebsrades an einem Gehäuseschenkel in einer weiteren Ausführungsform in einer schematischen Darstellung,
- Fig. 14a-1: in unterschiedlichen Ausführungsformen jeweils die Zuordnung von Gehäuse, Gurtwelle, Antriebsrad sowie Blockier- und Steuerelementen zueinander in einer schematischen Darstellung.

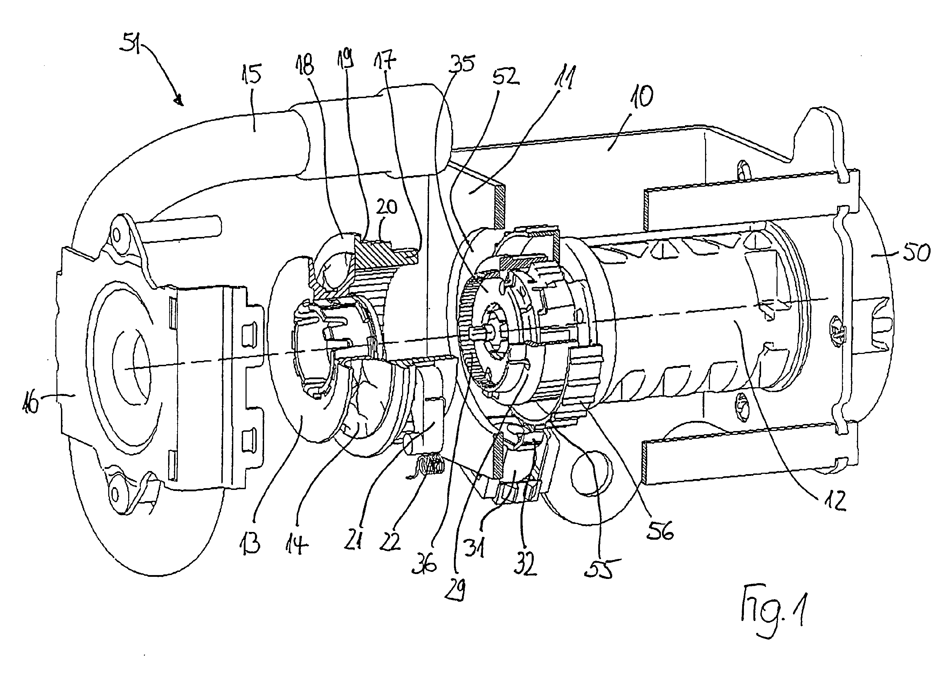

Der in Figur 1 insgesamt dargestellte Gurtaufroller hat ein U-förmiges Gehäuse 10, in dessen seitlichen U-Schenkeln eine Gurtwelle 12 drehbar gelagert ist; auf der Gurtwelle 12 ist das nicht dargestellte Gurtband des Sicherheitsgurtaufrollers aufgewickelt.

Während auf der einen Seite der Gurtwelle 12 unter einer Gehäusekappe 50 eine Aufwickelfeder angeordnet ist, ist auf der anderen Seite der Gurtwelle 12 ein Antriebsrad 13 einer Strammvorrichtung angeordnet, dem eine Antriebsvorrichtung 51 zugeordnet ist, um im Auslösefall der Strammvorrichtung das Antriebsrad 13 in Drehung zu versetzen. Die Antriebsvorrichtung 51 ist bei dem dargestellten Ausführungsbeispiel als Kugelstraffer entsprechend der DE 196 02 549 A1 ausgebildet; soweit die Antriebsvorrichtung in ihrer Ausgestaltung nicht zum Gegenstand der Erfindung zählt, wird zur Erläuterung auf die vorgenannte Druckschrift verwiesen. Auch sind andere Antriebsvorrichtungen, beispielsweise ein Antrieb über ein auf dem Antriebsrad aufgewickeltes Antriebsseil möglich. Im einzelnen umfaßt die Antriebsvorrichtung 51 ein über eine Befestigungskappe 16 an dem Gehäuse 10 befestigtes Rohrgehäuse 15, in welchem eine Treibladung sowie Kugeln als Massekörper angeordnet sind; im Auslösefall treiben die durch die Zündung des Gasgenerators entstehenden Gase die Kugeln aus dem Rohrgehäuse 15, so daß diese in Ausnehmungen 14 des Antriebsrades 13 eintreten und das Antriebsrad 13 somit in Drehung versetzen.

Das Antriebsrad 13 hat einen zu dem U-Schenkel 11 des Gehäuses 10 gerichteten Fortsatz 17, der in eine in dem U-Schenkel 11 des Gehäuses 10 ausgebildeten Lageröffnung 52 hineinragt. Dabei liegt ein an dem Fortsatz 17 ausgebildeter Lagerflansch 18 gegen die Außenseite des U-Schenkels 11 an, während ein anschließender Lagerkranz 19 in der Ebene der Lageröffnung 52 angeordnet ist, so daß das Antriebsrad 13 in dem U-Schenkel 11 des Gehäuses 10 drehbar gelagert ist.

An dem neben dem Lagerkranz 19 angeordneten und zur Gurtwelle 12 vorstehenden Bereich des Fortsatzes 17 ist eine Außenverzahnung als Blockierverzahnung 20 angeordnet, der eine an der Innenseite des U-Schenkels 11 schwenkbar angeordnete Blockierklinke 21 zugeordnet ist, die von einer Feder 22 in ihre Eingriffsstellung mit der Blockierverzahnung 20 vorgespannt ist. Dabei sind die Verzahnungen von Blockierklinke 21 und Blockierverzahnung 20 derart ausgebildet, daß eine Drehung des Antriebsrades 13 in Gurtabwickelrichtung stets blockiert und eine Drehung des Antriebsrades 13 in Gurtaufwickelrichtung durch Überratschen der Blockierklinke 21 über die Blockierverzahnung 20 ermöglicht ist. Zusätzlich weist das Antriebsrad 13 im Bereich seines Fortsatzes 17 eine Innenverzahnung 40 zum Eingriff von Blockiermitteln auf, so daß das am Gehäuse 10 über die Blockierklinke 21 festgelegte Antriebsrad 13 wie eine lastaufnehmende gehäuseseitige Verriegelung für das Blockiersystem des Gurtaufrollers wirkt. Die der Ankopplung des Antriebsrades 13 an die Gurtwelle 12 dienenden Bauteile sind nachfolgend gesondert erläutert.

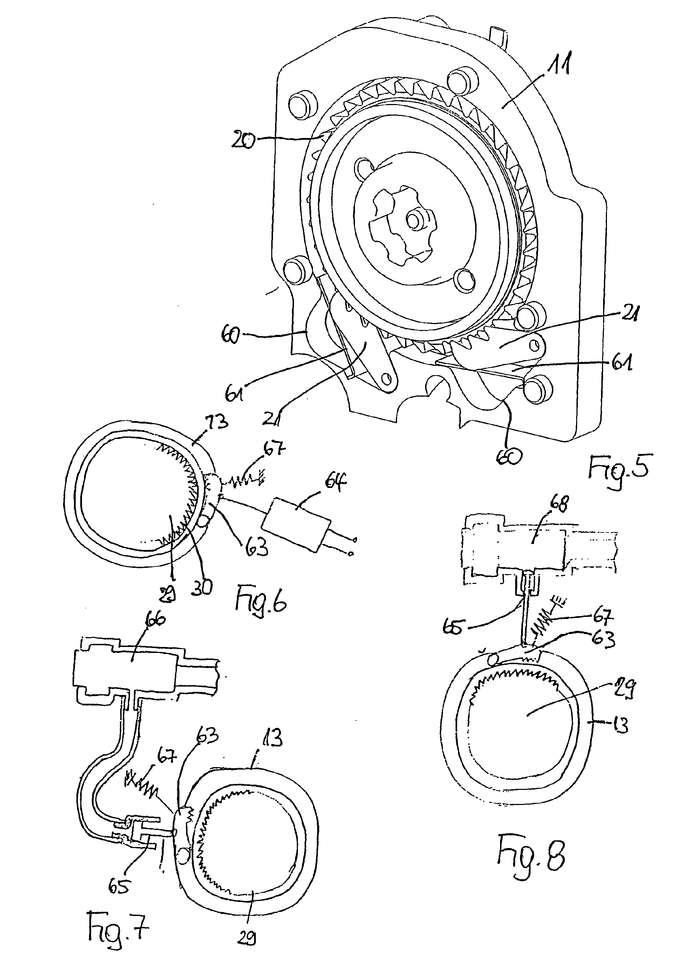

Eine alternative Anordnung der Blockierklinken 21 an dem Gehäuseschenkel 11 des Gehäuses 10 ist in Figur 5 dargestellt; bei diesem Ausführungsbeispiel sind zwei Blockierklinken 21 in der Ebene des U-Schenkels 11 des Gehäuses 10 angeordnet, und zwar in in dem Gehäuseschenkel 11 befindlichen Aussparungen 60. Die Federbelastung der Blockierklinken 21 erfolgt durch zwischen der jeweiligen Blockierklinke 21 und dem Rand der Aussparung 60 angeordnete Blattfedern 61. Wie sich unschwer ergibt, ist hiermit eine Verringerung der Baubreite des Gurtaufrollers verbunden.

Was die Ausbildung der Verzahnungen an dem Antriebsrad zum Eingriff der Blockierklinken 21 betrifft, schlägt die Erfindung hierzu unterschiedliche Ausführungen vor. Soweit gemäß Figur 1 die Außenverzahnung 20 und die Innenverzahnung 40 in einer Ebene angeordnet sind, wird gemäß Figur 12 in zweckmäßiger Weise vorgeschlagen, diese Verzahnungen 20, 40 in einem einheitlichen Herstellungsvorgang auszubilden, indem die Außenverzahnung 20 durch das Ausprägen der Innenverzahnung 40 aus dem Ringprofil des Antriebsrades 13 gebildet wird, so daß sich eine insgesamt einheitliche Verzahnung ergibt; dies ist in Figur 12 schematisch wiedergegeben.

Eine alternative Ausführung der Verzahnung sieht eine Ausbildung der Blockierverzahnung und der notwendigen Innenverzahnung 40 als gemeinsame Innenverzahnungen 62, 40 vor, die axial nebeneinander an der Innenseite des Ringprofils des Antriebsrades 13 ausgebildet sind. In diesem Fall ist die Blockierklinke 21 U-förmig ausgebildet, so daß sie von außen bzw. von der Seite her in die Blockier-Innenverzahnung 62 eingreift.

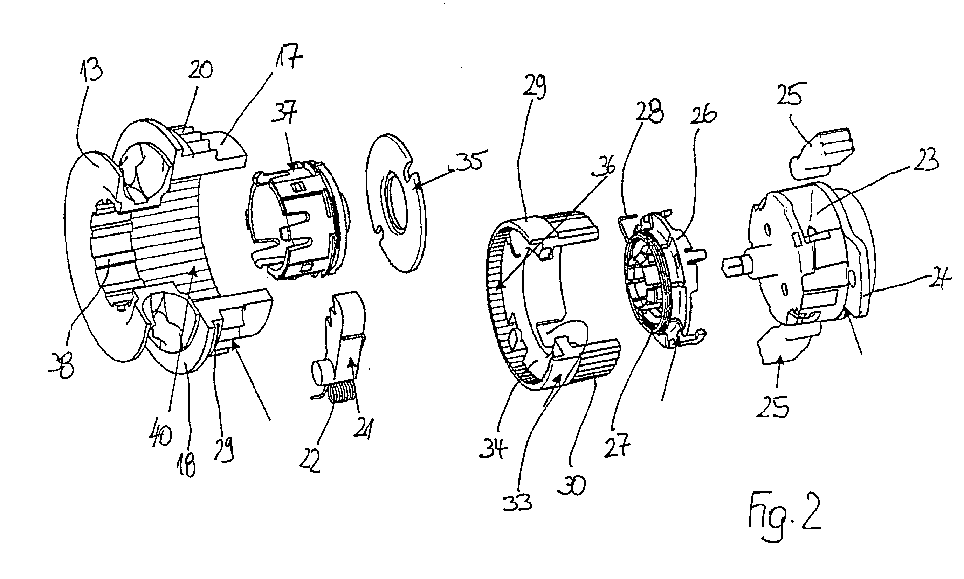

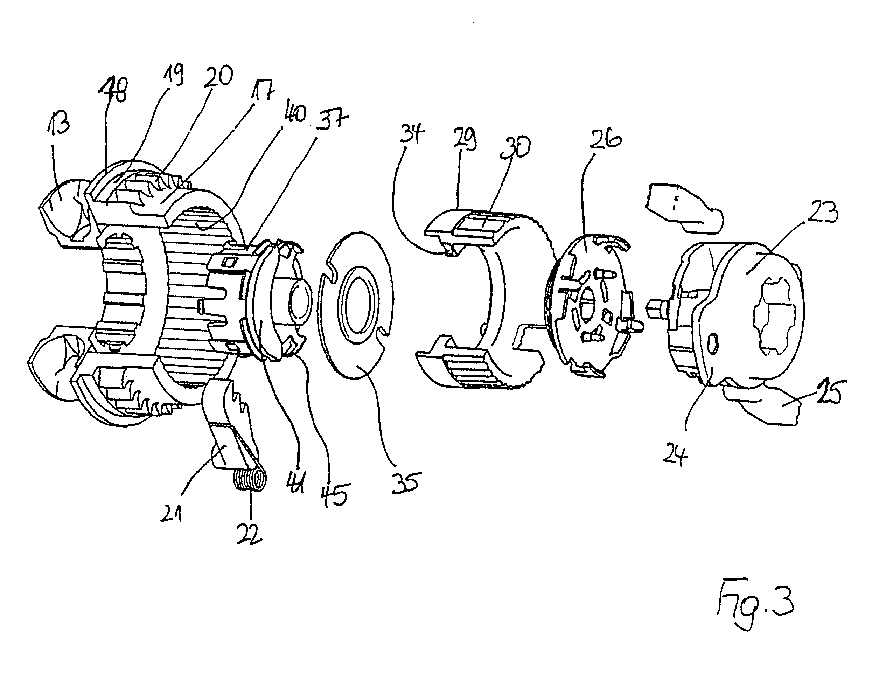

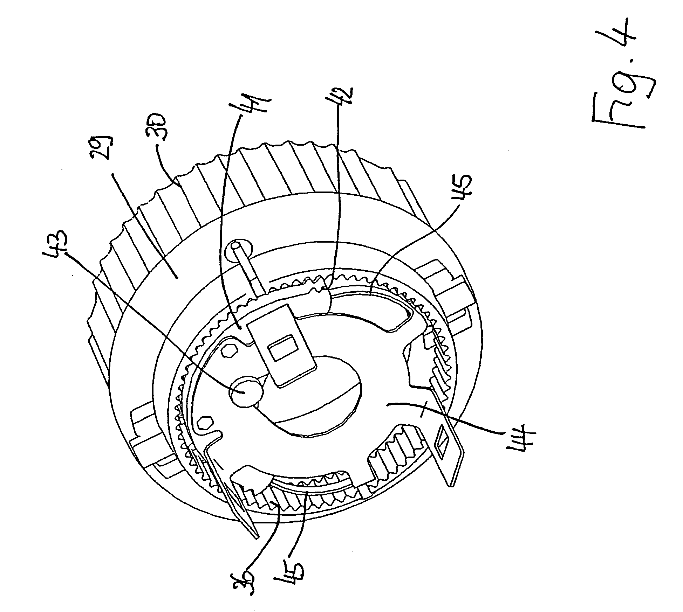

Die Ankopplung des Antriebsrades 13 an die Gurtwelle 12 wird in einem ersten Ausführungsbeispiel anhand der Figuren 2 bis 4 erläutert. Wie zunächst den Figuren 2 und 3 zu entnehmen ist, ist ein Profilkopf 23 an der zugeordneten Stirnseite der Gurtwelle befestigt, wobei wie nicht weiter dargestellt eine feste Verbindung zwischen dem Profilkopf 23 und der Gurtwelle 12 besteht, welche unmittelbar über dem Torsionsstab gebildet sein kann, so daß sich Gurtwelle 12 und Profilkopf 23 jeweils miteinander drehen.

Soweit bei Bauformen eines Gurtaufrollers mit einer als Torsionsstab ausgebildeten Kraftbegrenzungseinrichtung, beispielsweise gemäß der DE 43 31 027 A1, der Profilkopf 23 undrehbar mit dem im Inneren der Gurtwelle 12 verlaufenden Torsionsstab verbunden und insoweit eine Relativdrehung zwischen dem Profilkopf 23 und der Gurtwelle 12 möglich ist, sind an dem Profilkopf 23 radial abstehende Ansätze 24 vorgesehen, an denen nicht dargestellte, mit der Gurtwelle 12 verbundene Scherstifte angeordnet sind, so daß vor einem Ansprechen des Torsionsstabes der Profilkopf 23 unmittelbar mit der Gurtwelle 12 verbunden ist. An dem Profilkopf sind einander gegenüberliegend zwei radial ausschwenkbare Sperrklinken als Blockiermittel 25 angeordnet, über welche in einer noch zu beschreibenden Weise die Blockierung der Gurtwelle 12 gegenüber dem Gehäuse 10 erfolgt.

Soweit die Ansteuerung der Blockierung einerseits durch ein gurtbandsensitives und andererseits durch ein fahrzeugsensitives Steuersystem eingeleitet wird, besteht das gurtbandsensitive Steuersystem aus einem mit dem Profilkopf 23, vorzugsweise durch eine formschlüssige Rastverbindung zu verbindenden Adapter 26, an dem eine die Ansprechschwelle für das gurtbandsensitive Steuersystem festlegende g-Wert-Feder als sogenannte WS-Feder 27 festgelegt ist. Das äußere, radial abstehende Federende 28 ist an der Innenseite einer ringförmig ausgebildeten und den Profilkopf 23 mit Adapter 26 umschließenden Trägheitsmasse 29 eingehängt. Damit die Sperrklinken 25 des Profilkopfes 23 radial nach außen treten können, weist die Trägheitsmasse 29 jeweils gegenüberliegende Ausnehmungen 33 für den Durchtritt der Sperrklinken 25 auf.

Auf dem äußeren Umfang der Trägheitsmasse 29 ist zusätzlich ein sich mit der Trägheitsmasse 29 jeweils drehender Ring 55 angeordnet, in dessen Außenverzahnung 56 ein an einem Fahrzeugsensor 31 angeordneter Sperrarm 32 bei Ansprechen des Fahrzeugsensors eingreift und dadurch die Trägheitsmasse 29 in ihrer Bewegung festhält. Hierdurch werden die Sperrklinken 25 in die Blockierfunktion ausgelenkt. Die Trägheitsmasse 29 ist ferner auf ihrer Außenseite mit einer Außenverzahnung 30 versehen, die eine zusätzliche Blockierung der Gurtwelle 12 ermöglicht, indem die Trägheitsmasse bei ihrer seitlichen Auslenkung in der Verzahnung 40 blockiert. Es wäre deshalb alternativ möglich, den Sperrarm 32 des Fahrzeugsensors 31 gegebenenfalls auch unmittelbar an der Außenverzahnung 30 angreifen zu lassen.

Da die Trägheitsmasse 29 nicht nur als Bestandteil des fahrzeugsensitiven und des gurtbandsensitiven Steuersystems arbeitet, sondern zusätzlich noch eine Funktion hinsichtlich der Ankopplung des Antriebsrades 13 hat, ist der Innenraum der ringförmigen Trägheitsmasse 29 durch einen Innenflansch 34 abgeteilt. Gegen den Innenflansch 34 liegt dabei eine Sicherungsscheibe 35 an, die in die ringförmige Trägheitsmasse 29 eingelegt wird und mit dem Adapter 26 verrastet, so daß die Trägheitsmasse 29 unverlierbar, aber gegenüber dem Profilkopf 23 mit Adapter 26 drehbar an dem Profilkopf 23 festgelegt ist.

In ihrem axial über die Sicherungsscheibe 35 überstehenden Bereich ist die Trägheitsmasse 29 mit einer Innenverzahnung 36 versehen. In diesen mit der Innenverzahnung 36 versehenen Teil der Trägheitsmasse 29 ragt ein an dem Antriebsrad 13 über Formschlußgestaltungen 38 festgelegter Mitnehmerteil 37 hinein, wobei an dem Mitnehmerteil 37 eine Haltefeder 44 festgelegt ist. An der Haltefeder 44 ist eine zweiarmige Kupplungsklinke 41 mit einem zentral angeordneten Lagerzapfen 43 radial ausschwenkbar gelagert, die an ihrem einen äußeren Ende eine Verzahnung 42 aufweist, die zum Eingriff in die Innenverzahnung 36 der Trägheitsmasse 29 eingerichtet ist. Die Kupplungsklinke 41 ist in ihrer von den Federarmen 45 der Haltefeder 44 festgelegten Ruhestellung derart angeordnet, daß sie freigängig gegenüber der Trägheitsmasse 29 ist. Kommt es allerdings bei Ansprechen der Strammvorrichtung zu einer Drehbeschleunigung des Antriebsrades 13 und des damit verbundenen Mitnehmerteils 37, so bleibt die Kupplungsklinke 41 aufgrund ihrer Masseträgheit hinter der Drehbewegung des Mitnehmerteils 37 zurück, wobei die Kraft der Federarme 45 überwunden wird, so daß die Kupplungsklinke 41 radial bis zum Eingriff in die Innenverzahnung 36 ausschwenkt.

Beim Normalbetrieb des Gurtaufrollers mit Auf- und Abwickelbewegungen des Gurtbandes kommt es in an sich bekannter Weise aufgrund des Ansprechens des gurtbandsensitiven oder des fahrzeugsensitiven Steuersystems zu einer Relativdrehung der Trägheitsmasse 29 gegenüber dem Profilkopf 23 und damit gegenüber der Gurtwelle 12, indem entweder bei Ansprechen des fahrzeugsensitiven Steuersystems die Trägheitsmasse 29 durch Eingriff des Sperrarms 32 des Fahrzeugsensors 31 festgelegt wird, während sich die Gurtwelle 12 weiterdreht, oder indem bei einem schnellen Gurtbandauszug die Trägheitsmasse 29 aufgrund ihrer Masseträgheit gegenüber einer schnellen Drehung des Adapters 26 mit WS-Feder 27 zurückbleibt. In beiden Fällen führt die Relativbewegung zwischen Trägheitsmasse 29 und Profilkopf 23 zu einer radialen Aussteuerung der Sperrklinken 25 durch die Ausnehmungen 33 der Trägheitsmasse 29 hindurch bis zum Eingriff in die Innenverzahnung 40 des Fortsatzes 17 des Antriebsrades 13. Da das Antriebsrad 13 aufgrund des fortwährenden Eingriffs der Blockierklinke 21 in die Blockierverzahnung 20 an dem Gehäuse 10 festgelegt ist, wird die Gurtwelle 12 an einer Drehung in Gurtabwickelrichtung gehindert, und die bei weiterem Gurtbandzug auftretende Last wird über die Sperrklinken 25 und das Antriebsrad 13 in das Gurtaufrollergehäuse 10 abgeleitet. Insofern kommt dem Antriebsrad 13 eine Doppelfunktion zu, indem es auch für die Ausbildung der Gurtblockierung herangezogen ist.

Soweit der Gurtaufroller einen Torsionsstab als Kraftbegrenzungseinrichtung aufweist, führt die bei blockiertem Profilkopf 23 auf die Gurtwelle 12 weiterhin einwirkende Auszugsbelastung zu einem Abscheren der Scherstifte vom Ansatz 24 des Profilkopfes 23, so daß sich die Gurtwelle 12 über den an ihr und an dem Profilkopf 23 eingespannten Torsionsstab in einer an sich bekannten Weise gegenüber dem blockierten Profilkopf 23 bei gleichzeitiger Kraftaufnahme durch den Torsionsstab weiterdrehen kann.

Kommt es nun zu einer Auslösung der Strammvorrichtung und damit zu einer Drehung des Antriebsrades in Gurtaufwickelrichtung, so wird zunächst die Drehung des Antriebsrades 13 in Gurtaufwickelrichtung durch die in Eingriff mit der Blockierverzahnung 20 stehende Blockierklinke 21 nicht behindert, weil die Verzahnungen von Blockierverzahnung 20 und der federbelasteten Blockierklinke 21 derart aufeinander abgestimmt sind, daß sich das Antriebsrad 13 in Gurtaufwickelrichtung durch Überratschen der Blockierklinke 21 über die Blockierverzahnung 20 drehen kann.

Die Drehung des Antriebsrades 13 führt zu einem Ansprechen der über das Mitnehmerteil 37 an dem Antriebsrad 13 gelagerten Kupplungsklinke 41, die bei entsprechender Drehbeschleunigung in Eingriff mit der Innenverzahnung 36 der Trägheitsmasse 29 gesteuert wird, so daß die Trägheitsmasse 29 an die Drehung des Antriebsrades 13 gekoppelt ist. Damit kommt es zwangsläufig zu einer Relativbewegung zwischen der sich drehenden Trägheitsmasse 29 und der sich mehr oder weniger in Ruheposition befindenden Gurtwelle 12 mit Profilkopf 23, und diese Relativbewegung führt wiederum zu einem Einsteuern der Sperrklinken 25 in die Innenverzahnung 40 des Antriebsrades 13. Hierdurch erfolgt nun eine lastübertragende, unmittelbare Kopplung zwischen dem Antriebsrad 13 und dem Profilkopf 23, so daß über die Blockiereinrichtung des Gurtaufrollers gleichzeitig die Übertragung der Strammdrehung des Antriebsrades 13 in eine Drehung der Gurtwelle 12 in Gurtaufwickelrichtung vorgenommen wird.

Alternative Ausführungsformen zur Ansteuerung einer die Ankopplung des Antriebsrades 13 an die Trägheitsmasse 29 bewirkenden und damit den Kupplungseingriff der Sperrklinken 25 des Profilkopfes 23 in die Innenverzahnung 40 des Antriebsrades 13 herbeiführenden Kupplungsklinke sind in den Figuren 6 bis 8 beschrieben.

Wie sich zunächst aus Figur 6 ergibt, ist eine Kupplungsklinke 63 an dem Antriebsrad derart drehbar gelagert, daß sie in Eingriff mit der Blockierverzahnung 30 der Trägheitsmasse 29 einschwenkbar ist. Dieses Einschwenken wird über einen schematisch dargestellten Aktuator 64 ausgeführt, der beispielsweise als Elektromagnet oder als Piezoelement ausgebildet sein kann.

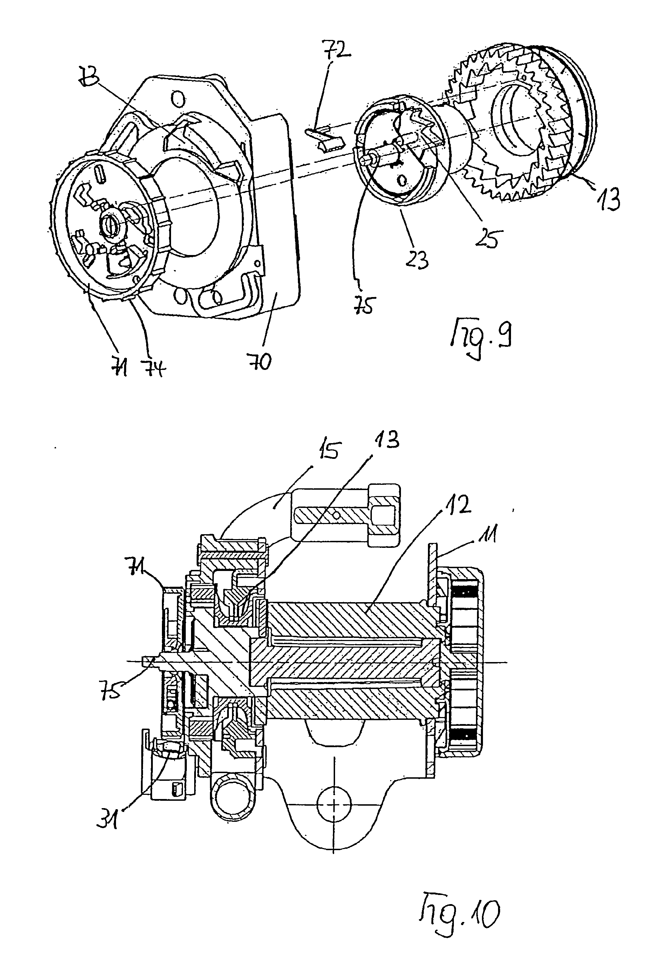

Wie sich in einer anderen Ausführungsform gemäß Figur 7 ergibt, kann der Aktuator auch als an der Kupplungsklinke 63 angreifende Kolbeneinheit 65 mit einer an der Kupplungsklinke 63 angreifenden Kolbenstange ausgebildet sein. Die Kolbeneinheit 65 wird von einer gesonderten pyrotechnischen Antriebseinheit 66 angesteuert, die gemeinsam mit der Strammvorrichtung auslösbar sein kann.

Bei dem in Figur 8 dargestellten Ausführungsbeispiel ist zur Ansteuerung der die Kupplungsklinke 63 beaufschlagenden Kolbeneinheit 65 die Antriebseinheit 68 für die Strammvorrichtung herangezogen, die zu diesem Zweck mittels einer Gasdruckleitung 69 mit der Kolbeneinheit 65 verbunden ist. Bei Auslösung der Antriebseinheit 68 wird nicht nur die Antriebsvorrichtung 51 der Strammvorrichtung mit Gas beaufschlagt, vielmehr wird ein Teil des erzeugten Gases abgezweigt und über die Gasdruckleitung 69 der Kolbeneinheit 65 zugeführt, so daß die Kupplungsklinke 63 entsprechend in Eingriff mit der Trägheitsmasse 29 eingesteuert wird.

Eine weitere Ausführungsform zur Ankopplung des Antriebsrades 13 an die Trägheitsmasse 29 ergibt sich aus Figur 11, wobei hier an dem Antriebsrad 13 ein längsverschiebbarer Stift 76 derart angeordnet ist, daß der Stift 76 in den Weg der Antriebskugeln der Strammvorrichtung hineinreicht und von der ersten auftreffenden Kugel längsverschoben wird und bei dieser Längsverschiebung in Eingriff mit der Innenverzahnung 36 der Trägheitsmasse 29 gelangt und somit das Antriebsrad 13 und die Trägheitsmasse 29 aneinander koppelt.

Eine wiederum alternative Ausführungsform zur Verbindung von Antriebsrad 13 und Gurtwelle 12 ist in den Figuren 9 und 10 dargestellt, wobei bei diesem Ausführungsbeispiel keine topfförmige Trägheitsmasse vorgesehen ist. Bei diesem Ausführungsbeispiel ist an dem U-Schenkel 11 des Gehäuses 10 eine U-förmige und das Antriebsrad 13 umgreifende Gehäusekappe 70 angeordnet, auf deren Außenseite eine trägheitsgesteuerte Steuerscheibe 71 auf einem hierzu durch die Gehäusekappe 70 hindurchgeführten Wellenfortsatz 75 gelagert ist. Die Steuerscheibe 71 weist auf ihrem äußeren Umfang ebenfalls eine Blockierverzahnung 74 auf, der ein fahrzeugsenstiver Sensor zugeordnet sein kann. An dem Antriebsrad 13 ist ein Mitnehmerhebel 72 schwenkbar gelagert, der durch eine in der Gehäusekappe 70 ausgebildete Kulissenführung 73 hindurchgeführt und zum Eingriff mit der Blockierverzahnung 74 der Steuerscheibe 71 eingerichtet ist. Die Kulissenführung 73 ist derart ausgebildet, daß bei beginnender Drehung des Antriebsrades 13 der Mitnehmerhebel 72 durch die feststehende Kulissenführung 73 in Eingriff mit der Blockierverzahnung 74 der Steuerscheibe 71 gebracht wird und die Steuerscheibe 71 dadurch in ihrer Drehbewegung mit der Drehung des Antriebsrades 13 mitnimmt. Hierdurch kommt es zu der Relativdrehung der Steuerscheibe 71 zu dem Profilkopf 23, was - wie beschrieben - zur Aussteuerung der Sperrklinken 25 führt. Am Ende dieses Aussteuerweges schlägt der Mitnehmerhebel 72 am Ende der Kulissenführung 73 an, so daß in dieser Stellung der Mitnehmerhebel 72 abschert und somit die Kupplung des Antriebsrades 13 an die Steuerscheibe 71 wieder aufgehoben wird; diese Kupplung ist während der Übertragung der Strammbewegung nach Eingriff der Sperrklinken 25 in die Innenverzahnung 40 des Antriebsrades 13 nicht mehr erforderlich.

In den Figuren 14a - 1 sind unterschiedliche Möglichkeiten wiedergegeben, die konstruktiv notwendigen Bestandteile des Gurtaufrollers wie Gehäuse, Gurtwelle, Antriebsrad sowie Blockier- und Steuerelemente in einer unterschiedlichen Lage zueinander anzuordnen; daraus wird deutlich, daß die Erfindung auf alle denkbaren, konstruktiv bedingten Zuordnungen der Einzelteile eines Gurtaufrollers anwendbar und dadurch in ihrer Anwendung nicht beschränkt ist.

In Figur 14a ist zunächst eine schematische Darstellung einer Anordnung wiedergegeben, bei der das Strafferrad 13 mit einer Lagerstelle 80 für die Gurtwelle 12 in einem Gehäuseschenkel 11 des U-förmigen Gehäuses 10 innenseitig angeordnet ist, wobei die Außenverzahnung 20 zum Anschluß der gehäuseseitig gelagerten Blockierklinke 21 und die Innenverzahnung 40 zum Eingriff der Gurtblockierung (Profilkopf 23, Sperrklinken 25) zur Gurtwelle 12 hin gerichtet angeordnet sind.

Das in Figur 14b dargestellte Ausführungsbeispiel unterscheidet sich im wesentlichen dadurch, daß die Außenverzahnung 20 mit Blockierklinke 21 und die Innenverzahnung 40 mit Gurtblockierung 23, 25 auf unterschiedlichen Seiten des Antriebsrades 13 angeordnet sind, wobei das Antriebsrad mit der Innenverzahnung 40 verschachtelt angeordnet ist, um axiale Baulänge einzusparen.

Bei dem in Figur 14c dargestellten Ausführungsbeispiel ist der Aufbau des Gurtaufrollers ähnlich der Darstellung in Figur 14a, wobei das Antriebsrad 13 innenseitig benachbart der Gurtwelle 12 angeordnet und die Verzahnungen 20, 40 nach außen hin aufgebaut sind; hierbei ist ein Blockierwiderlager einbezogen.

Das in Figur 14d dargestellte Ausführungsbeispiel ist ähnlich dem in Figur 14b dargestellten Ausführungsbeispiel aufgebaut, wobei nun das Antriebsrad 13 mit Innenverzahnung 40 und die Außenverzahnung 20 mit Blockierklinke 21 auf unterschiedlichen Seiten des Gehäuseschenkels 11 angeordnet sind, wobei sich das Antriebsrad 13 innenseitig des Gehäuseschenkels 11 befindet. Ein zusätzliches Gehäuseteil 81 als Widerlager für die Sperrklinke 21 ist an dem U-Schenkel 11 des Gehäuses vorgesehen.

Das in Figur 14e dargestellte Ausführungsbeispiel zeigt im wesentlichen eine Umkehrung des in Figur 14d dargestellten Ausführungsbeispiels, wobei jetzt das Antriebsrad 13 außerhalb des Gehäuseschenkels 11 angeordnet und die in einer Ebene liegenden Verzahnungen 40, 20 des Antriebsrades 13 zwischen Gehäuseschenkel 11 und Gurtwelle 12 angeordnet sind.

Das in Figur 14f dargestellte Ausführungsbeispiel entspricht dem zu Figur 14e beschriebenen Ausführungsbeispiel, wobei eine Vertauschung der Konstruktionselemente von innerhalb nach außerhalb vorgenommen ist, indem das Antriebsrad 13 zwischen Gehäuseschenkel 11 und Gurtwelle 12 und die übrigen Elemente außerhalb des Gehäuses 10 angeordnet sind. Die Blockierklinke 21 ist entsprechend Figur 14d wiederum an einem zusätzlichen Gehäuseteile 81 abgestützt.

Das in Figur 14g dargestellte Ausführungsbeispiel entspricht dem in Figur 14e dargestellten Ausführungsbeispiel mit der Maßgabe, daß die Außenverzahnung 20 mit Blockierklinke 21 zwischen dem Gehäuseschenkel 11 und der Gurtwelle 12 angeordnet sind, während das Antriebsrad 13 mit der daran verschachtelt angeordneten Innenverzahnung 40 mit Gurtblockierung 23, 25 außerhalb des Gehäuses 10 angeordnet sind.

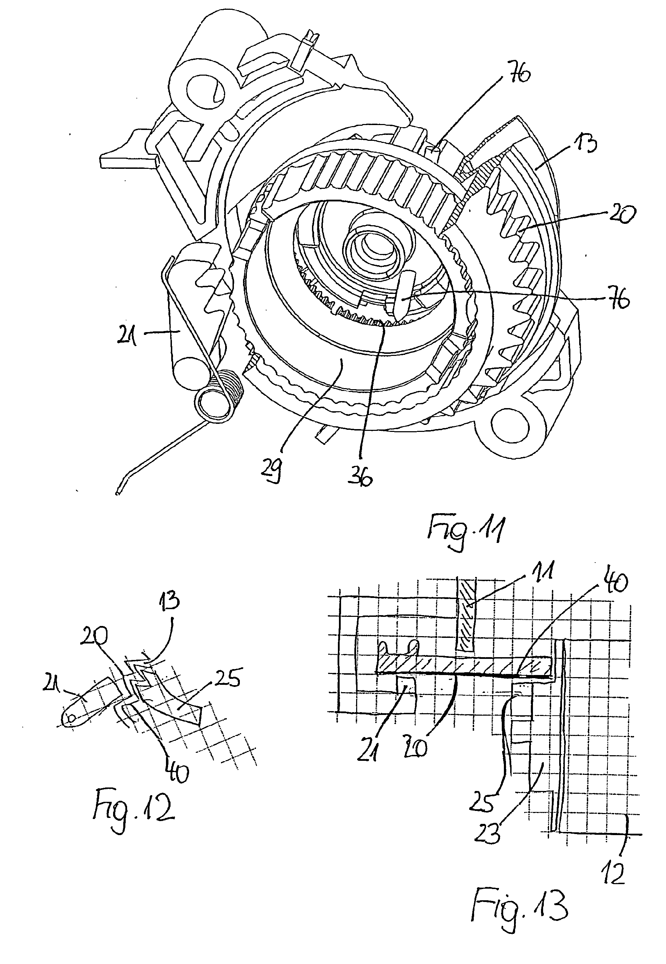

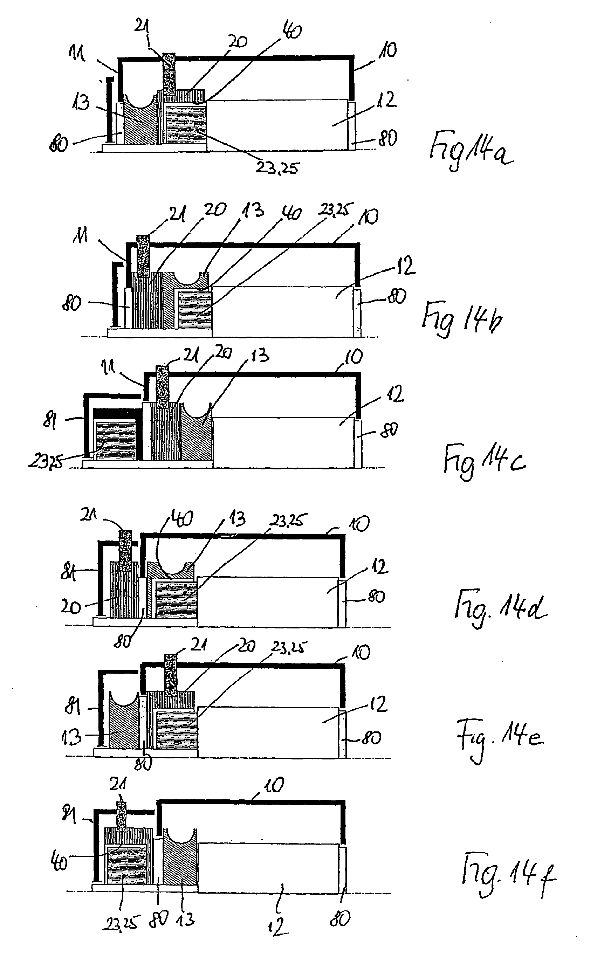

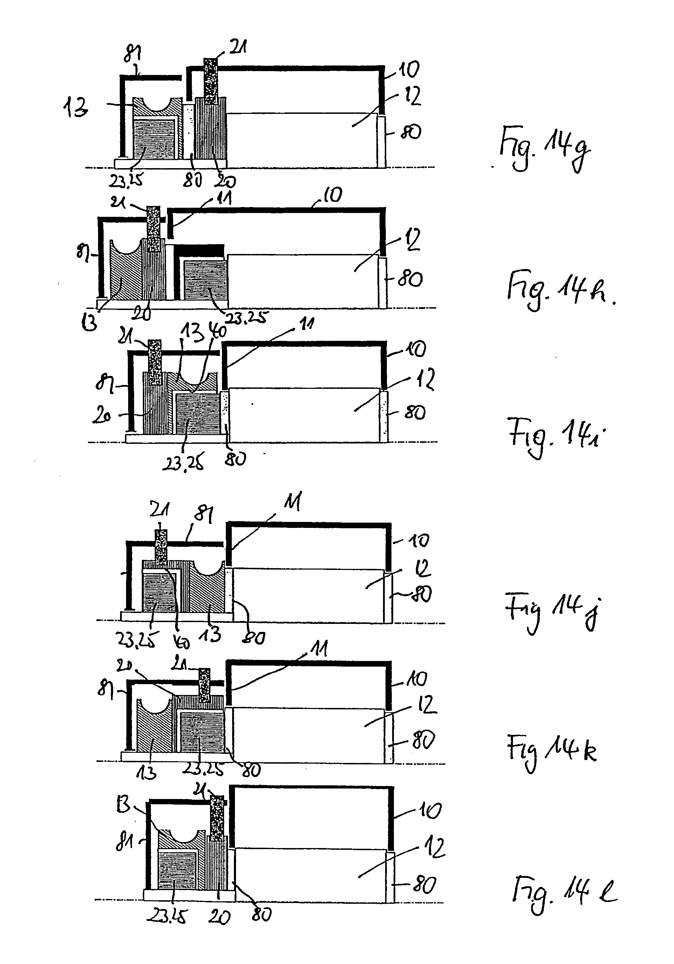

Bei den nachfolgend noch beschriebenen Ausführungsbeispielen gemäß Figuren 14h - 141 ist wie schon bei Figuren 14d und 14f zusätzlich zu dem bisher beschriebenen U-förmigen Gehäuse 10 an einem U-Schenkel 11 des Gehäuses ein zusätzliches Gehäuseteil 81 als Widerlager für die Sperrklinke 21 vorgesehen, so daß jeweils die Sperrklinke 21 an diesem zusätzlichen Gehäuseteil 81 gelagert ist. Hierbei stellt im weiteren das Ausführungsbeispiel gemäß Figur 14h eine Umkehrung der Anordnung gemäß Figur 14c dar, wobei die Gurtblockierung 23, 25 innerhalb des Gehäuses 10 und die übrigen Konstruktionsbestandteile außerhalb des Gehäuses 10 angeordnet sind.

Bei dem in Figur i dargestellten Ausführungsbeispiel ist ein mit dem Ausführungsbeispiel gemäß Figur 14b identischer Aufbau der Konstruktionselemente gewählt, wobei die entsprechenden Elemente Antriebsrad 13 mit den zugehörigen Blockierungen außerhalb des Gehäuses 10 angeordnet sind.

Das in Figur 14j dargestellte Ausführungsbeispiel entspricht wiederum dem den Figur 14a dargestellten Ausführungsbeispiel mit einer seitenverkehrt vorgesehenen Anordnung der Konstruktionselemente, die sämtlich außerhalb des Gehäuses 10 angeordnet sind.

Entsprechendes gilt auch für die Ausführungsbeispiele gemäß den Figuren 14k und 141, die analog der vorstehenden Beschreibung ebenfalls alternative Zuordnungen zeigen.

Die in der vorstehenden Beschreibung, den Patentansprüchen, der Zusammenfassung und der Zeichnung offenbarten Merkmale des Gegenstandes dieser Unterlagen können sowohl einzeln als auch in beliebigen Kombinationen untereinander für die Verwirklichung der Erfindung in ihren verschiedenen Ausführungsformen wesentlich sein.

## Patentansprüche

1. Selbstsperrender Gurtaufroller mit einem Gehäuse (10), mit einer wenigstens ein fahrzeugsensitiv und/oder gurtbandsensitiv ansteuerbares Blockiermittel (25) aufweisenden Blockiereinrichtung für die Gurtwelle (12) und mit einer auf die Gurtwelle (12) einwirkenden Strammvorrichtung, bestehend aus einem über eine Antriebsvorrichtung in Drehung zu versetzenden Antriebsrad (13) welches bei Auslösung der Strammvorrichtung mit der Gurtwelle (12) koppelbar ist, wobei das Antriebsrad (13) der Strammvorrichtung über die Blockiereinrichtung der Gurtwelle (12) kraftübertragend mit der Gurtwelle (12) verbindbar ist, **dadurch gekennzeichnet, dass** zur getrennten Ausführung von Blockierfunktion und Kopplungsfunktion die Blockiereinrichtung für die Gurtwelle (12) zusätzlich zu dem die Gurtblockierung bewirkenden Blockiermittel (25) eine an der Blockiervorrichtung angeordnete und von dem Antriebsrad (13) aktivierbare Klinke zur Ankopplung des Antriebsrades (13) an die Blockiereinrichtung für die Gurtwelle (12) aufweist.

2. Gurtaufroller nach Anspruch 1, **dadurch gekennzeichnet, dass** das ringförmig ausgebildete Antriebsrad (13) eine zum Eingriff des an der Gurtwelle (12) angeordneten Blockiermittels (25) der Blockiereinrichtung eingerichtete Innenverzahnung (40) sowie zusätzlich eine Außenverzahnung (20) zum Eingriff wenigstens einer durch Federkraft nachgiebig in Eingriff mit der Außenverzahnung (20) stehenden, am Gehäuse (10) gelagerten Blockierklinke (21) aufweist.

3. Gurtaufroller nach Anspruch 2, **dadurch gekennzeichnet, dass** die Blockierverzahnung (20) des Antriebsrades (13) und die Blockierklinke (21) derart zueinander ausgerichtet sind, dass eine Drehung des Antriebsrades (13) in Gurtabwickelrichtung stets blockiert und eine Drehung des Antriebsrades (13) in Gurtaufwickelrichtung durch Überratschen der Blockierklinke (21) über die Blockierverzahnung (20) des Antriebsrades (13) vermöglicht ist.

4. Gurtaufroller nach Anspruch 1 oder 2, **dadurch gekennzeichnet, dass** die Blockierklinke (21) seitlich neben dem U-Schenkel (11) des Gehäuses (10) angeordnet und an dem U-Schenkel (11) unter Vorspannung durch eine Drehfeder (23) schwenkbar gelagert ist.

5. Gurtaufroller nach Anspruch 1 oder 2, **dadurch gekennzeichnet, dass** die Blockierklinke (21) in der Ebene des U-Schenkels (11) in einer an diesem angeordneten Aussparung (60) angeordnet und in der Aussparung (60) schwenkbar gelagert ist, wobei zwischen der Blockierklinke (21) und dem Rand der Aussparung eine Blattfeder (61) angeordnet ist.

6. Gurtaufroller nach einem der Ansprüche 2 bis 5, **dadurch gekennzeichnet, dass** auf dem Umfang des Antriebsrades (13) mehrere Blockierklinken (21) an dem Gehäuse (10) des Gurtaufrollers gelagert sind.

7. Gurtaufroller nach Anspruch 2 oder 3, **dadurch gekennzeichnet, dass** die als Außenverzahnung ausgebildete Blockierverzahnung (20) und die Innenverzahnung (40) des Antriebsrades (13) in einer Ebene angeordnet sind.

8. Gurtaufroller nach Anspruch 7, **dadurch gekennzeichnet, dass** die Außenverzahnung (20) durch Ausformen der Zähne der Innenverzahnung (40) aus dem Ringprofil des Antriebsrades (13) gebildet ist derart, dass Außenverzahnung (20) und Innenverzahnung (40) eine Verzahnung mit einheitlichen Zähnen bilden.

9. Gurtaufroller nach Anspruch 2 oder 3, **dadurch gekennzeichnet, dass** die als Innenverzahnung ausgebildete Blockierverzahnung und die Innenverzahnung (40) axial nebeneinander an dem Ringprofil des Antriebsrades (13) angeordnet sind, und die gehäusefest gelagerte Blockierklinke (21) zum Eingriff U-förmig ausgebildet ist.

10. Gurtaufroller nach Anspruch 1, **dadurch gekennzeichnet, dass** das Antriebsrad (13) an dem Gehäuse (10) über unter Last zerstörbare Blockiermittel festgelegt und die Antriebsvorrichtung (51) der Strammvorrichtung derart ausgebildet ist, dass nach Abschluss der Antriebsbewegung eine Rückbewegung der Antriebsvorrichtung (51) in Gurtauszugsrichtung ausgeschlossen ist derart, dass über die blockierte Antriebsvorrichtung (51) das Antriebsrad (13) undrehbar festgelegt ist und als Blockierverzahnung wirkt.

11. Gurtaufroller nach einem der Ansprüche 1 bis 10, **dadurch gekennzeichnet, dass** ein von der Strammvorrichtung ausgelöstes Ansteuerelement (63,72,41,76) zur Ankopplung des Blockiermittels (25) der Blockiereinrichtung für die Gurtwelle (12) an das Antriebsrad (13) vorgesehen ist.

12. Gurtaufroller nach einem der Ansprüche 1 bis 14, **dadurch gekennzeichnet, dass** zur gurtbandsensitiven Steuerung des Blockiermittels (25) eine die Blockiereinrichtung umgreifende Trägheitsmasse (29) vorgesehen ist, deren Relativbewegung bezüglich der Drehbewegung der Gurtwelle (12) das Blockiermittel (25) in Eingriff mit dem Antriebsrad (13) aussteuert.

13. Gurtaufroller nach Anspruch 12, **dadurch gekennzeichnet, dass** der Trägheitsmasse (29) eine Blockierverzahnung (30) zugeordnet ist, mit welcher der Sensorhebel (31) eines fahrzeugsensitiven Sensors (30) in Eingriff bringbar ist.

14. Gurtaufroller nach einem der Ansprüche 11 bis 13, **dadurch gekennzeichnet, dass** das Ansteuerelement eine in die Blockierverzahnung (30) der Trägheitsmasse (29) einsteuerbare Kupplungsklinke (63) ist.

15. Gurtaufroller nach Anspruch 14, **dadurch gekennzeichnet, dass** die Kupplungsklinke (63) bei Auslösung der Strammvorrichtung mittels einer gesonderten Klinkenbetätigung in Eingriff mit der Blockierverzahnung (30) der Trägheitsmasse (29) einsteuerbar ist.

16. Gurtaufroller nach Anspruch 15, **dadurch gekennzeichnet, dass** die Klinkenbetätigung als ein die Kupplungsklinke (63) bewegender Aktuator (64) ausgebildet ist.

17. Gurtaufroller nach Anspruch 16, **dadurch gekennzeichnet, dass** der Aktuator (64) ein Elektromagnet ist.

18. Gurtaufroller nach Anspruch 16, **dadurch gekennzeichnet, dass** der Aktuator (64) ein Piezoelement ist.

19. Gurtaufroller nach Anspruch 16, **dadurch gekennzeichnet, dass** der Aktuator eine pyrotechnisch angetriebene Kolbeneinheit (65) ist.

20. Gurtaufroller nach Anspruch 19, **dadurch gekennzeichnet, dass** zur Betätigung der Kolbeneinheit (65) eine gesonderte auslösbare pyrotechnische Antriebseinheit (66) vorgesehen ist.

21. Gurtaufroller nach Anspruch 19, **dadurch gekennzeichnet, dass** die Kolbeneinheit (65) an die pyrotechnische Antriebsvorrichtung (68) der Strammvorrichtung angeschlossen und von dieser beaufschlagbar ist.

22. Gurtaufroller nach Anspruch 11, **dadurch gekennzeichnet, dass** das Ansteuerelement ein an dem Antriebsrad (13) gelagerter und über ein Gehäuseteil (70) zwangsgeführter Mitnehmerhebel (72) ist, der bei Drehung des Antriebsrades (13) zwangsgesteuert in Eingriff mit der Blockierverzahnung (74) einer trägheitsgesteuerten Steuerscheibe (71) für die Blockiermittel (25) gelangt und im Anschluss an die durch die Steuerscheibe (71) bewirkte Verriegelung der Blockiermittel (25) mit dem Antriebsrad (13) außer Eingriff mit der Steuerscheibe (71) kommt.

23. Gurtaufroller nach Anspruch 22, **dadurch gekennzeichnet, dass** die Steuerscheibe (71) an der Außenseite einer das Antriebsrad (13) umgreifenden Gehäusekappe (70) auf einem Fortsatz (75) der Gurtwelle angeordnet ist und in der Gehäusekappe (70) eine Kulissenführung (73) für die Zwangsführung des die Gehäusekappe (70) durchgreifenden Mitnehmerhebel (72) ausgebildet ist.

24. Gurtaufroller nach Anspruch 23, **dadurch gekennzeichnet, dass** die Kulissenführung (73) derart ausgebildet ist, dass der Mitnehmerhebel (72) nach Beendigung der durch die Relativdrehung der Steuerscheibe (71) gegenüber dem Profilkopf (23) bewirkten Aussteuerung der Blockierklinken (25) in Eingriff mit der Innenverzahnung (40) des Antriebsrades (13) abgeschert wird.

25. Gurtaufroller nach einem der Ansprüche 11 bis 14, **dadurch gekennzeichnet, dass** das Ansteuerelement eine an einem in die topfförmige Trägheitsmasse (29) reichenden und mit dem Antriebsrad (13) verbundenen Mitnehmerteil (37) ausschwenkbar gelagerte Kupplungsklinke (41) ist, die in Eingriff mit einer an der Innenseite der topfförmigen Trägheitsmasse (29) ausgebildete Innenverzahnung (36) steuerbar ist.

26. Gurtaufroller nach Anspruch 25, **dadurch gekennzeichnet, dass** die Kupplungsklinke (41) an einer an dem Mitnehmerteil (37) gehalterten Haltefeder (44) schwenkbar gelagert ist.

27. Gurtaufroller nach Anspruch 26, **dadurch gekennzeichnet, dass** die Haltefeder (44) wenigstens einen die Kupplungsklinke (41) in ihrer Ruheposition festlegenden Federarm (45) aufweist.

28. Gurtaufroller nach einem der Ansprüche 11 bis 13, **dadurch gekennzeichnet, dass** das Ansteuerelement aus einem von der Antriebsvorrichtung (51) der Strammvorrichtung zu Beginn von deren Antriebsbewegung in eine an der Innenseite der topfförmigen Trägheitsmasse (29) ausgebildete Innenverzahnung (36) einsteuerbares Kupplungsglied (76) besteht.

29. Gurtaufroller nach Anspruch 28, **dadurch gekennzeichnet, dass** das Kupplungsglied aus einem an dem Antriebsrad (13) unter der Wirkung der Antriebsvorrichtung (51) längsverschiebbar angeordneten Stift (76) besteht, der durch seine Längsverschiebung in Eingriff mit der Innenverzahnung (36) der Trägheitsmasse (29) gelangt.

30. Gurtaufroller nach einem der Ansprüche 1 bis 29, **dadurch gekennzeichnet, dass** das Antriebsrad (13) mit seiner Blockierverzahnung (20) auf der Außenseite eines U-Schenkels (11) des Gehäuses (10) des Gurtaufrollers angeordnet und die Blockierklinke (21) auf der Außenseite des U-Schenkels (11) gelagert ist.

31. Gurtaufroller nach einem der Ansprüche 1 bis 29, **dadurch gekennzeichnet, dass** das Antriebsrad (13) mit seinem mit der außerhalb des U-förmigen Gehäuses (10) des Gurtaufrollers angeordneten Antriebsvorrichtung (51) zusammenwirkenden Bereich auf der Außenseite des U-Schenkels (11) angeordnet ist und mit einem die Blockierverzahnung (20) tragenden Fortsatz (17) den U-Schenkel (11) in einer Lageröffnung (52) durchgreift, und die Blockierklinke (21) auf der Innenseite des U-Schenkels (11) gelagert ist.

32. Gurtaufroller nach Anspruch 31, **dadurch gekennzeichnet, dass** der den U-Schenkel (11) des Gehäuses (10) durchgreifende Fortsatz (17) des Antriebsrades (13) das Drehlager für die Drehung des Antriebsrades (13) bildet.

33. Gurtaufroller nach einem der Ansprüche 1 bis 32, mit einer aus einem einerseits mit der Gurtwelle verbundenen und andererseits das Blockiermittel der Blockiereinrichtung tragenden Torsionsstab bestehenden Kraftbegrenzungsvorrichtung, **dadurch gekennzeichnet, dass** der Torsionsstab einen das Blockiermittel (25) tragenden und von der Trägheitsmasse (29) umgriffenen Profilkopf (23) aufweist.

34. Gurtaufroller nach Anspruch 33, **dadurch gekennzeichnet, dass** der Profilkopf (23) mit der Gurtwelle (12) über gesonderte Verbindungsmittel verbunden ist.
